# EUROPEAN PATENT APPLICATION

(11) **EP 3 282 408 A1**
(43) Date of publication of application: **14.02.2018**
(21) Application number: 17182440.2
(22) Date of filing: 20.07.2017
(51) Int. Cl.: G06Q 10/06

(54) **INFORMATION PROCESSING DEVICE, BEHAVIOR SUPPORTING METHOD, AND BEHAVIOR SUPPORTING PROGRAM**

(30) Priority: 09.08.2016 JP 2016157031
(71) Applicant: Fujitsu Limited, Kawasaki-shi, Kanagawa 211-8588 (JP)
(72) Inventor: BABA, Takumi, Kawasaki-shi, Kanagawa 211-8588 (JP); NODA, Masahide, Kawasaki-shi, Kanagawa 211-8588 (JP); SUMIOKA, Motoshi, Kawasaki-shi, Kanagawa 211-8588 (JP); OHNO, Takashi, Kawasaki-shi, Kanagawa 211-8588 (JP)
(74) Representative: Haseltine Lake LLP

(57) **Abstract**

A behavior supporting device includes a history registering unit (12), a skipping determining unit (13), and a mediating unit (14). The history registering unit (12) registers, in an execution history database (DB), execution information of an already-executed task that has been executed in the past in a workflow. The skipping determining unit (13) determines, based on task information indicating the details of a planned task and based on one or more sets of execution information registered in the execution history DB, whether or not the planned task is skippable. The mediating unit (14) skips the planned task that has been determined to be skippable by the skipping determining unit (13).

## Description

### FIELD

The embodiments discussed herein are related to an information processing device, a behavior supporting program, and a behavior supporting method.

### BACKGROUND

Typically, in a business enterprise, a workflow system is put to use with the aim of achieving efficiency in the business operations. In a workflow system, the flow of a series of jobs in the business operations is defined as a workflow, and notification to the operators and circulation of data is done according to the defined workflow so as to support the implementation of the business operations.

A workflow system has been disclosed in which, for example, when an operator selects a "skip" button, the system control proceeds while skipping some of the jobs in the workflow (for example, see Patent Document 1).

[Patent Document 1] Japanese Laid-open Patent Publication No. 10-177608

However, in the related technology mentioned above, the operator is made to determine whether or not to skip any jobs and to perform operations for skipping any jobs. Hence, there is a risk that the determination and the operations becomes a burden on the operator. That is, in the related technology, there is room for improvement as far as reducing the burden on the job executors in a workflow is concerned.

Accordingly, it is desirable to reduce the burden on the job executors in a workflow.

### SUMMARY

According to an aspect of the embodiments, an information processing device includes: a history registering unit that stores, in a history storing unit, execution information of an already-executed task which has been executed in past in a workflow; a skipping determining unit that, based on task information indicating details of a planned task and based on one or more sets of execution information stored in the history storing unit, determines whether or not the planned task is skippable; and a mediating unit that skips a task that has been determined to be skippable by the skipping determining unit.

### BRIEF DESCRIPTION OF DRAWINGS

FIG. 1 is a diagram illustrating a configuration of a behavior supporting system according to a first embodiment;
FIG. 2 is a diagram illustrating an example of workflow data according to the first embodiment;
FIG. 3 is a functional block diagram illustrating a configuration of a behavior supporting device according to the first embodiment;
FIG. 4 is a diagram illustrating a display example of a display unit according to the first embodiment;
FIG. 5 is a diagram illustrating an example of feedback information according to the first embodiment;
FIG. 6 is a diagram illustrating an exemplary data structure of an execution history database (DB) according to the first embodiment;
FIG. 7 is a diagram illustrating an example of task information according to the first embodiment;
FIG. 8 is a diagram illustrating a display example of the display unit according to the first embodiment;
FIG. 9 is a flowchart for explaining a mediation operation performed according to the first embodiment;
FIG. 10 is a flowchart for explaining a skipping determination operation performed according to the first embodiment;
FIG. 11 is a flowchart for explaining a history registration operation performed according to the first embodiment;
FIG. 12 is a diagram illustrating an example of a skipping determination operation performed according to a second embodiment;
FIG. 13 is a functional block diagram illustrating a configuration of a behavior supporting device according to the second embodiment;
FIG. 14 is a diagram illustrating an exemplary data structure of a resource DB according to the second embodiment;
FIG. 15 is a diagram illustrating an example of task information according to the second embodiment;
FIG. 16 is a flowchart for explaining a skipping determination operation performed according to the second embodiment;
FIG. 17 is a diagram illustrating an example of a skipping determination operation performed according to a third embodiment;
FIG. 18 is a functional block diagram illustrating a configuration of a behavior supporting device according to the third embodiment;
FIG. 19 is a diagram illustrating an exemplary data structure of a user DB according to the third embodiment;
FIG. 20 is a diagram illustrating an example of an extraction operation performed according to the third embodiment;
FIG. 21 is a diagram illustrating an example of an extraction operation performed according to the third embodiment;
FIG. 22 is a flowchart for explaining a skipping determination operation performed according to the third embodiment;
FIG. 23 is a functional block diagram illustrating a configuration of a behavior supporting device according to a fourth embodiment;
FIG. 24 is a diagram illustrating display examples of the display unit according to the fourth embodiment;
FIG. 25 is a diagram illustrating display examples of the display unit according to the fourth embodiment;
FIG. 26 is a diagram illustrating an example of rejection information according to the fourth embodiment;
FIG. 27 is a flowchart for explaining a rejection information transmission operation performed according to the fourth embodiment;
FIG. 28 is a flowchart for explaining a rejection input operation performed according to the fourth embodiment; and
FIG. 29 is a diagram illustrating an exemplary computer that executes a behavior supporting program.

### DESCRIPTION OF EMBODIMENTS

Preferred embodiments will be explained, by way of example only, with reference to accompanying drawings. However, the invention is not limited to the embodiments described below.

### [a] First Embodiment

### Behavior supporting system

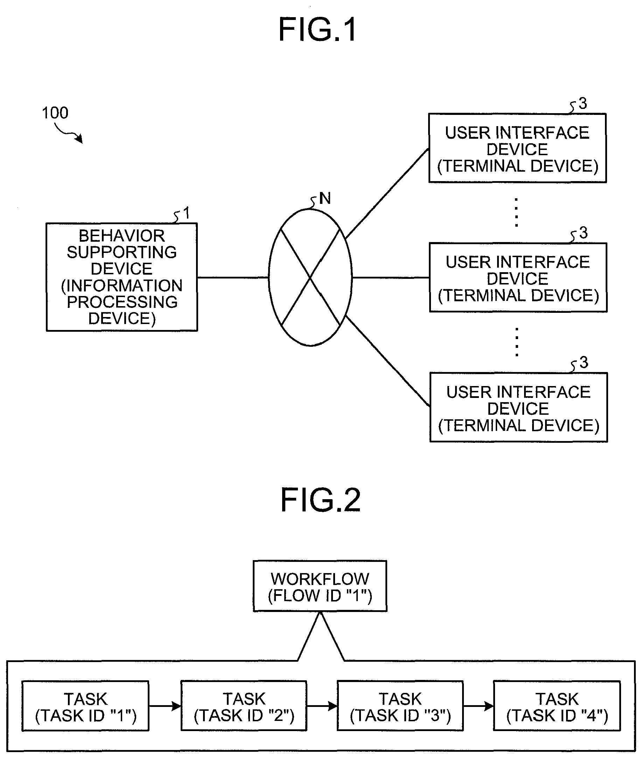

FIG. 1 is a diagram illustrating a configuration of a behavior supporting system according to a first embodiment. FIG. 2 is a diagram illustrating an example of workflow data according to the first embodiment.

As illustrated in FIG. 1, a behavior supporting system 100 includes a behavior supporting device 1 and a plurality of user interface devices 3.

The behavior supporting device 1 is, for example, an information processing device such as a server and is connected to the user interface devices 3 via a network N. Herein, the network N is, for example, a wide area network (WAN) such as the Internet.

The user interface devices 3 are, for example, handheld terminals such as smartphones or tablets. Each user interface device 3 establishes connection with the network N using wireless communication such as a wireless local area network (wireless LAN), third-generation (3G) communication, fourth-generation (4G) communication, or long term evolution (LTE) communication; and thus gets connected with the behavior supporting device 1 via the network N.

Meanwhile, the user interface devices 3 are not limited to handheld terminals, and can alternatively be laptop personal computers, desktop personal computers, or personal digital assistants (PDAs). Herein, the user interface devices 3 represent examples of a terminal device.

The behavior supporting device 1 stores workflow data, which represents information in which the sequence of execution of a plurality of tasks in a workflow is defined as illustrated in FIG. 2. The workflow data at least contains a flow ID enabling identification of the workflow, a plurality of task IDs enabling identification of a plurality of tasks, and sequence information indicating the sequence of execution of the tasks.

The behavior supporting device 1 delivers tasks to one or more user interface devices 3 based on the workflow data; and supports the implementation of the tasks done by the users of the user interface devices 3.

Meanwhile, there are times when unproductive tasks, which need not be executed, come up in a workflow. For example, assume a task of getting the keys of the office at the time of arriving at work, and assume that all users in the office are registered as the prospective executors of the task. In that case, every time a user arrives at work, he or she is assigned with the task of getting the keys.

However, the task of getting the keys needs to be actually implemented by only one of the users. Hence, for example, if the user who arrives first at work gets the keys, then the users arriving at work subsequently need not execute the same task. That is, for the users who arrive at work later, the task of getting the keys becomes an unproductive task. Thus, in case the task of getting the keys is delivered also to the users who arrive at work later, then it may end up in obstructing the implementation of the business operations.

In the related technology, it is proposed that a user who determines a particular task to be unnecessary skips that task by performing an operation. However, since the determination of whether or not to skip a task as well as the operation for skipping that task is performed by the user, the determination and the operation may end up burdening the user. Moreover, there is also a risk of a human-induced mistake such as skipping a task that is not supposed to be skipped.

In that regard, the behavior supporting device 1 collects execution information of previously-executed tasks from each user interface device 3, stores the execution information, and determines whether or not a planned task is skippable. Then, the behavior supporting device 1 skips the delivery of the task that is determined to be skippable.

As a result, the delivery of unnecessary tasks to the user interface devices 3 can be skipped without burdening the users. In this way, in the behavior supporting device 1, it becomes possible to reduce the burden on the job executors in a workflow.

Meanwhile, in this written description, a "task" represents one unit of a job to be executed in a workflow. The term "task" can include the overall actions performed by a user, and is thus not limited to the jobs in the course of business but can also include actions such as traveling or dining performed in private time. Moreover, the rest taken in between a plurality of actions and the action of moving to a particular place for performing the next action can also be included in the term "task". Furthermore, the term "planned task" implies a task, from among the tasks included in a workflow being executed, that is not yet delivered to the user interface devices 3.

The term "task information" represents information for defining the contents of a task, and contains task-related information such as the specific job description, the prospective executor of the task, the time requested to execute the task, the location of execution of the task, and the tools to be used in executing the task. Moreover, the "task information" may or is not limited to define the planned date and time of execution of the task and the planned date and time of end of the task.

The term "delivery schedule" represents information for defining, for one or more tasks, the user representing the task delivery destination and the date and time of delivery. The term "delivery of a task" implies sending, to the user interface devices 3, the information included in the task information and other information related to the concerned task. The term "mediation" implies skipping a task.

### Configuration of behavior supporting device according to first embodiment

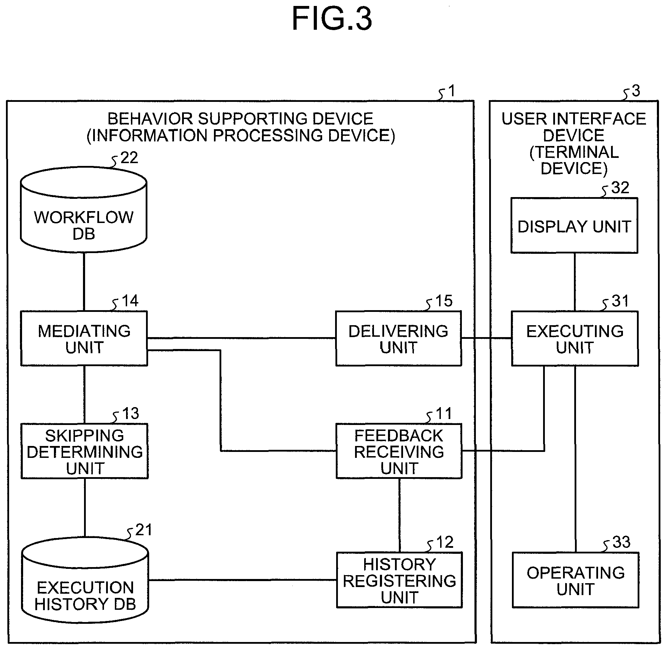

Explained below with reference to FIG. 3 is a configuration of the behavior supporting device 1 according to the first embodiment. FIG. 3 is a functional block diagram illustrating a configuration of the behavior supporting device 1 according to the first embodiment.

As illustrated in FIG. 3, the behavior supporting device 1 includes a feedback receiving unit 11, a history registering unit 12, a skipping determining unit 13, a mediating unit 14, and a delivering unit 15. Moreover, the behavior supporting device 1 includes an execution history database (DB) 21 and a workflow DB 22. The execution history DB 21 and the workflow DB 22 are stored in a memory unit (not illustrated). The memory unit corresponds to a memory device such as a nonvolatile semiconductor memory element in the form of a flash memory or an FRAM (registered trademark) (FRAM stands for Ferroelectric Random Access Memory).

Each user interface device 3 includes an executing unit 31, a display unit 32, and an operating unit 33. The display unit 32 is a display such as a liquid crystal display (LCD) or an organic electroluminescence (organic EL) display; and displays a variety of information. Herein, although it is assumed that the display unit 32 is a touch-screen display, it need not always be of the touch-screen type. The operating unit 33 is an input device that receives various operations from the user. Herein, it is assumed that the operating unit 33 is of the touch-screen type and is configured in an integrated manner with the display unit 32. However, alternatively, the operating unit 33 can be configured using a keyboard or a mouse.

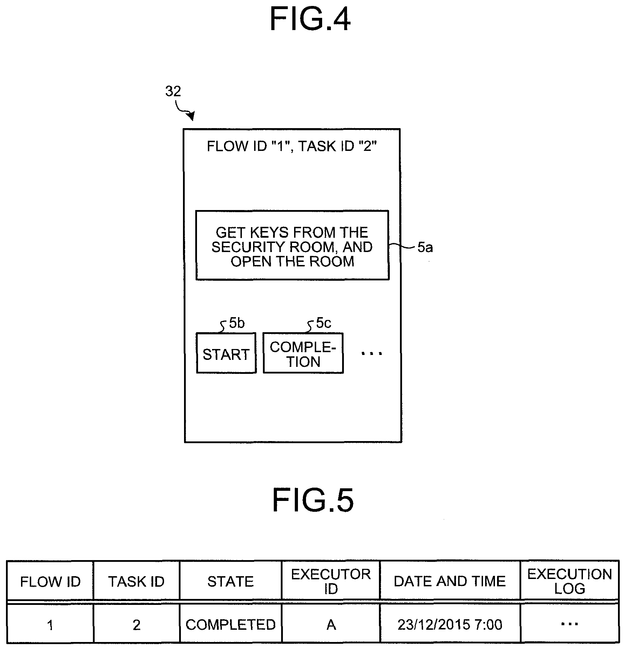

In the user interface device 3, the executing unit 31 displays, on the display unit 32, information related to a planned task based on the information delivered by the behavior supporting device 1. FIG. 4 is a diagram illustrating a display example of the display unit according to the first embodiment.

As illustrated in FIG. 4, in the display unit 32 of the user interface device 3, for example, text information 5a is displayed that indicates the details of the task which the user is supposed to execute thence. In the case illustrated in FIG. 4, the text information 5a indicating "get keys from the security room, and open the room" is displayed. As a result, the user can visually understand the job that is supposed to be performed by him or her.

Moreover, in the display unit 32, buttons such as a start button 5b and a completion button 5c are displayed. When one of the buttons 5b and 5c is selected, the executing unit 31 generates feedback information corresponding to the selected button and sends it to the behavior supporting device 1.

FIG. 5 is a diagram illustrating an example of the feedback information according to the first embodiment. As illustrated in FIG. 5, the feedback information contains the following items: "flow ID", "task ID", "state", "user ID", "executor ID", "date and time", and "execution log".

In the item "flow ID" is stored a flow ID enabling identification of a workflow. In the item "task ID" is stored a task ID enabling identification of a task. In the item "state" is stored information related to the state of the task. More specifically, in the item "state" is stored the information corresponding to the button selected by the user. For example, if the completion button 5c is selected by the user, "completed" is stored in the item "state". If the start button 5b is selected, "started" is stored in the item "state".

In the item "executor ID" is stored a user ID enabling identification of the user who executed the corresponding task. In the item "date and time" is stored, for example, the date and time at which the user selected the start button 5b or the completion button 5c. When "completed" is stored in the item "state", the information stored in the item "date and time" indicates the date and time of completion of execution of the task. When "started" is stored in the item "state", the information stored in the item "date and time" indicates the date and time of start of execution of the task. In the item "execution log" is stored the information related to the execution of the task. For example, when "completed" is stored in the item "state", the data obtained during the concerned task is stored in the item "execution log".

For example, the feedback information illustrated in FIG. 5 indicates that the task having a task ID "2" in the workflow having a flow ID "1" is completed by the user having a user ID "A" on "12/23/2015 7:00".

Returning to the explanation with reference to FIG. 3, the feedback receiving unit 11 of the behavior supporting device 1 sends the feedback information, which is received from the user interface device 3, to the history registering unit 12 and the mediating unit 14.

The history registering unit 12 receives the feedback information from the feedback receiving unit 11, and determines whether or not "completed" is stored in the item "state" in the received feedback information. If "completed" is stored in the item "state", then the history registering unit 12 generates execution information from the received feedback information and registers the execution information in the execution history DB 21.

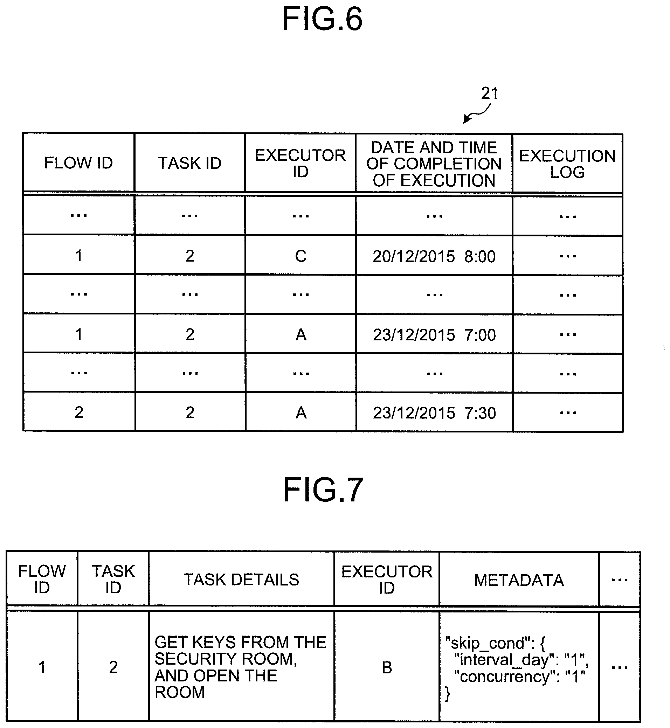

FIG. 6 is a diagram illustrating an exemplary data structure of the execution history DB according to the first embodiment. As illustrated in FIG. 6, the execution history DB 21 is used to store, as execution information, the information of the tasks that have already been completely executed by a plurality of users.

The execution information contains the following items: "flow ID", "task ID", "executor ID", "date and time of completion of execution", and "execution log". Of those items, the items "flow ID", "task ID", "executor ID", and "execution log" correspond to the items "flow ID", "task ID", "executor ID", and "execution log", respectively, in the feedback information. The item "date and time of completion of execution" corresponds to the item "date and time" in the feedback information.

Returning to the explanation with reference to FIG. 3, in response to a skipping determination request issued by the mediating unit 14, the skipping determining unit 13 determines whether or not a planned task is skippable.

A skipping determination request issued by the mediating unit 14 includes the task information of a planned task. Explained below with reference to FIG. 7 are the contents of the task information. Herein, FIG. 7 is a diagram illustrating an example of the task information according to the first embodiment.

As illustrated in FIG. 7, the task information contains the following items: "flow ID", "task ID", "task details", "executor ID", and "metadata". In the item "flow ID" is stored the flow ID. In the item "task ID" is stored the task ID. In the item "task details" is stored text data indicating the details of the task. In the item "executor ID" is stored the user ID enabling identification of the prospective executor of the task. In the item "metadata" is stored the data included in the task information.

For example, in the example illustrated in FIG. 7, it is indicated that the task having a task ID "2" in the workflow having the flow ID "1" has contents "get keys from the security room, and open the room", and that the user identified by a user ID "B" is the prospective executor of that task.

In the metadata is embedded a skipping condition that is used in a skipping determination operation. For example, in the task information illustrated in FIG. 7, in the metadata is embedded a skipping condition representing "to be executed by only one person once a day". Meanwhile, the execution interval and the number of executors representing skipping condition are not limited to the example given above, and can be set in an arbitrary manner. In addition to containing the skipping condition, the metadata contains, for example, image data or text data that is displayed on the user interface device 3.

Meanwhile, in addition to containing the items illustrated in FIG. 7, the task information can also contain, for example, the user name of the prospective executor, the planned date and time of execution of the task, and the planned date and time of end of the task.

The skipping determining unit 13 receives a skipping determination request issued by the mediating unit 14 and performs a skipping determination operation based on the task information included in the received skipping determination request and based on the execution information stored in the execution history DB 21.

More particularly, the skipping determining unit 13 extracts the flow ID, the task ID, and the skipping condition from the task information. For example, the skipping determining unit 13 extracts the flow ID "1", the task ID "2", and the skipping condition representing "to be executed by only one person once a day" from the task information illustrated in FIG. 7.

Subsequently, the skipping determining unit 13 searches the execution history DB 21 with the extracted flow ID and the extracted task ID serving as the keys, and extracts execution information containing the same flow ID and the same task ID. For example, from the execution history DB 21 illustrated in FIG. 6, the skipping determining unit 13 extracts execution information containing an executor ID "C" and the date and time of completion of execution as "12/20/2015 8:00" and extracts execution information containing an executor ID "A" and the date and time of completion of execution as "12/23/2015 7:00" as the sets of execution information containing the flow ID "1" and the task ID "2".

Then, the skipping determining unit 13 determines whether or not the skipping condition is satisfied by the extracted sets of execution information. For example, if "12/23/2015" is the current date, the extracted sets of execution information include the execution information that contains the same date and thus satisfies the skipping condition representing "to be executed by only one person once a day". Accordingly, the skipping determining unit 13 determines that the task having the task ID "2" in the workflow having the flow ID "1" is skippable. Then, the skipping determining unit 13 sends the determination result to the mediating unit 14.

Meanwhile, when any one workflow registered in the workflow DB 22 satisfies a start condition, the mediating unit 14 determines whether or not it is possible to execute a plurality of tasks included in that workflow.

The mediating unit 14 retrieves the task information of a planned task from the workflow DB 22; generates a skipping determination request including the retrieved task information; and sends the skipping determination request to the skipping determining unit 13. When the determination result of the skipping determination operation is received from the skipping determining unit 13, the mediating unit 14 determines whether or not the concerned task can be executed by taking into account the received determination result.

More particularly, the mediating unit 14 skips the tasks that are determined to be skippable by the skipping determining unit 13. As a result, the tasks that are determined to be skippable by the skipping determining unit 13 are excluded from the targets for delivery to the user interface devices 3.

Meanwhile, according to the feedback information input from the feedback receiving unit 11, the mediating unit 14 can also change the execution plan of a task ex-post facto. For example, when feedback information indicating that a particular task has been completed is received, the mediating unit 14 can prepone the planned date and time of execution of the next task.

Subsequently, the mediating unit 14 instructs the delivering unit 15 to deliver the tasks.

For example, the mediating unit 14 sends a delivery schedule and the task information of a planned task to the delivering unit 15, and then the delivering unit 15 delivers the task according to the delivery schedule. In that case, when the planned date and time of execution of a particular task comes up; the delivering unit 15 sends, to the user interface device 3 corresponding to the executor ID specified in the task information, delivery information that contains, for example, the task details and the metadata from among the task information of the concerned task. Meanwhile, in a memory unit (not illustrated) is stored information in which terminal IDs enabling identification of the user interface devices 3 are associated to the user IDs. Thus, based on that information, the delivering unit 15 identifies the user interface device 3 corresponding to the concerned executor ID.

Every time the planned date and time of execution of a task comes up, the mediating unit 14 can send the delivery information of that task to the delivering unit 15. Thus, every time the delivery information is received from the mediating unit 14, the delivering unit 15 can send the received delivery information to the user interface device 3. Meanwhile, herein, although the delivery information that is generated from the task information is sent to the user interface device 3, the delivering unit 15 can alternatively send the task information itself to the user interface device 3.

When a task has been skipped; the mediating unit 14 can instruct the delivering unit 15 to deliver, to the user interface devices 3, the information in which skipping information indicating that the previous task has been skipped is added to the delivery information regarding the task to be executed after the skipped task.

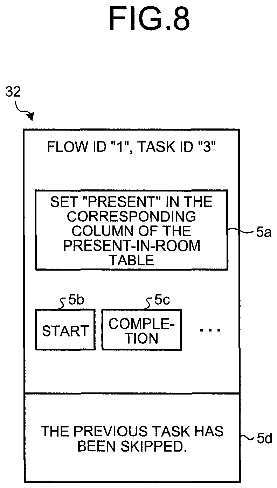

FIG. 8 is a diagram illustrating a display example of the display unit according to the first embodiment. As illustrated in FIG. 8, in the display unit 32, the text information 5a indicating 'set "present" in the corresponding column of the present-in-room table' is displayed as the task information of the task having a task ID "3" in the workflow having the flow ID "1". Moreover, in the display unit 32, text information indicating "the previous task has been skipped." is also displayed as skipping information 5d. As a result, the user can clearly recognize that the previous task has been skipped.

### Flowchart of mediation operation according to first embodiment

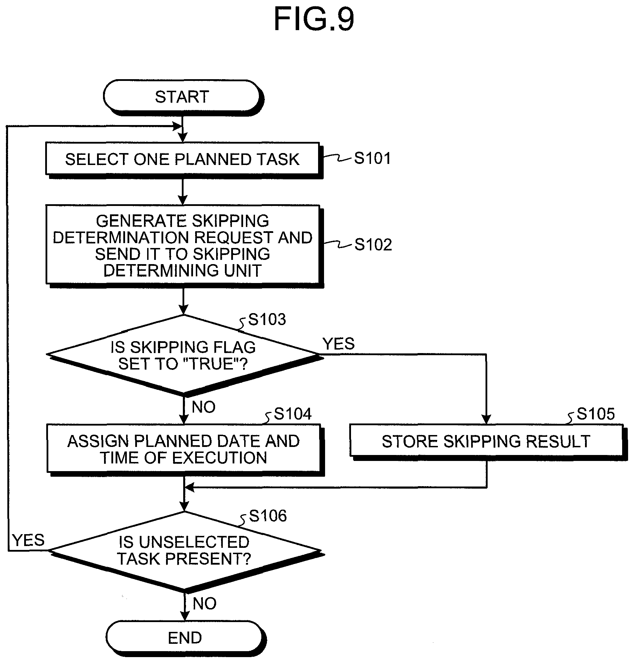

Explained below with reference to FIG. 9 is a specific sequence of operations in a mediation operation performed by the mediating unit 14. FIG. 9 is a flowchart for explaining a mediation operation performed according to the first embodiment.

As illustrated in FIG. 9, the mediating unit 14 selects one of the planned tasks (Step S101); and generates a skipping determination request including the task information of the selected task, and sends the skipping determination request to the skipping determining unit 13 (Step S102).

Subsequently, the mediating unit 14 determines whether or not a skipping flag included in the determination result, which is received from the skipping determining unit 13, is set to "true" (Step S103). If it is determined that the skipping flag is not set to "true" (No at Step S103), that is, if the skipping determining unit 13 has decided that the task is not skippable; then the mediating unit 14 assigns a planned date and time of execution to the selected task (Step S104).

On the other hand, at Step S103, if it is determined that the skipping flag is set to "true" (Yes at Step S103), that is, if the skipping determining unit 13 has determined that the task is skippable; then the mediating unit 14 stores a skipping result in the memory unit (not illustrated) (Step S105). The skipping result includes, for example, the flow ID, the task ID, and the executor ID as the information enabling identification of the skipped task. Based on the skipping result, the mediating unit 14 identifies the task to be executed subsequent to the skipped task; adds skipping information to the delivery information of the identified task; and instructs the delivering unit 15 to deliver the task to the user interface devices 3.

After the operation at Step S105 or Step S104 is completed, the mediating unit 14 determines whether or not any unselected task is present (Step S106). For example, if all tasks included in a workflow represent the target tasks, then the mediating unit 14 determines whether or not the operations have been performed with respect to all tasks included in the workflow. If it is determined that an unselected task is present (Yes at Step S106), then the system control returns to Step S101 and the mediating unit 14 repeats the operations from Step S101 onward. On the other hand, when no unselected task is present (No at Step S106), the mediating unit 14 ends the mediation operation.

### Flowchart of skipping determination operation according to first embodiment

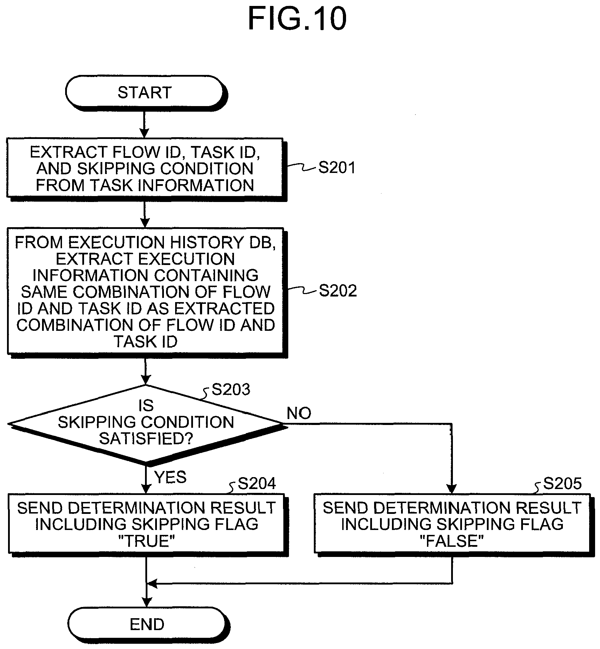

Explained below with reference to FIG. 10 is a specific sequence of operations in a skipping determination operation performed by the skipping determining unit 13. FIG. 10 is a flowchart for explaining a skipping determination operation performed according to the first embodiment. The flowchart illustrated in FIG. 10 is initiated when the skipping determining unit 13 receives a skipping determination request from the mediating unit 14.

As illustrated in FIG. 10, upon receiving a skipping determination request from the mediating unit 14, the skipping determining unit 13 extracts the flow ID, the task ID, and the skipping condition from the task information included in the received skipping determination request (Step S201). Then, the skipping determining unit 13 extracts, from the execution history DB 21, sets of execution information containing the same combination of the flow ID and the task ID as the extracted combination of the flow ID and the task ID (Step S202).

Subsequently, the skipping determining unit 13 determines whether or not the skipping condition, which is extracted at Step S201, is satisfied by one or more sets of execution information extracted at Step S202 (Step S203). If it is determined that the skipping condition is satisfied (Yes at Step S203), then the skipping determining unit 13 sends a determination result including the skipping flag "true" to the mediating unit 14 (Step S204), and ends the skipping determination operation. On the other hand, if it is determined that the skipping condition is not satisfied (No at Step S203), then the skipping determining unit 13 sends a determination result including the skipping flag "false" to the mediating unit 14 (Step S205), and ends the skipping determination operation.

### Flowchart of history registration operation according to first embodiment

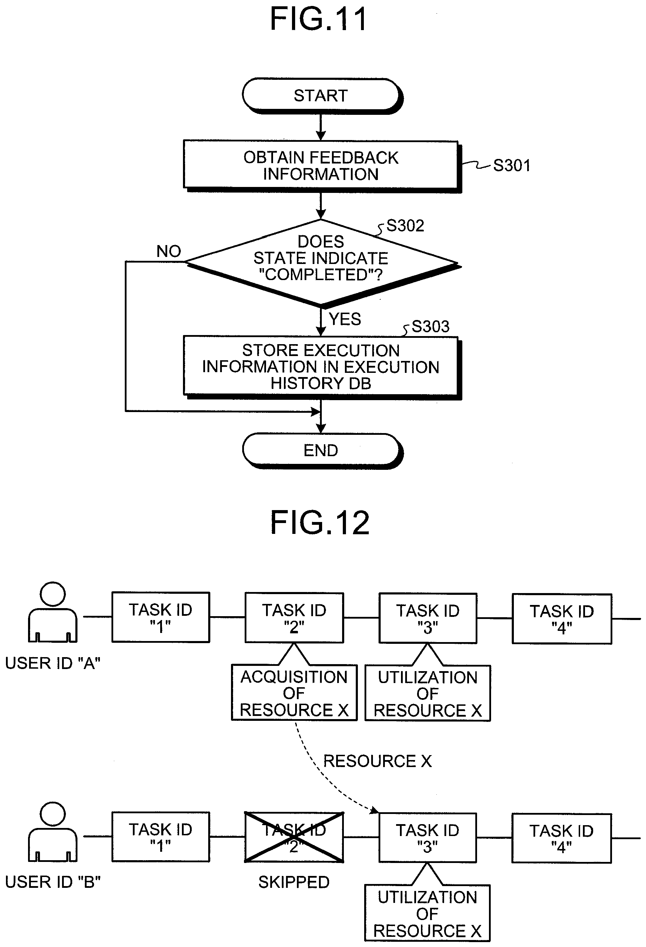

Explained below with reference to FIG. 11 is a specific sequence of operations in a history registration operation performed by the history registering unit 12. FIG. 11 is a flowchart for explaining a history registration operation performed according to the first embodiment.

As illustrated in FIG. 11, the history registering unit 12 obtains the feedback information from the feedback receiving unit 11 (Step S301), and determines whether or not "completed" is set in the item "state" included in the obtained feedback information (Step S302). If it is determined that "completed" is set in the item "state" (Yes at Step S302), then the history registering unit 12 generates execution information from the obtained feedback information and stores the execution information in the execution history DB 21 (Step S303), and ends the history registration operation. On the other hand, at Step S302, if "completed" is not set in the item "state" (No at Step S302), then the history registering unit 12 ends the history registration operation without performing the operation at Step S303.

Meanwhile, there is no particular restriction on the timings of performing the mediation operation (see FIG. 9) and the skipping determination operation (see FIG. 10). For example, the mediating unit 14 can perform the mediation operation at the start of a workflow, that is, before the delivery of the initial task in the workflow. In that case, the skipping determining unit 13 performs the skipping determination operation with respect to all tasks included in the workflow before the delivery of the initial task.

Moreover, before the execution of each task, the skipping determining unit 13 can again perform the skipping determination operation with respect to that task. In that case, the mediating unit 14 issues, to the skipping determining unit 13, a skipping determination request regarding each task either during the execution of the corresponding previous task or after the completion of execution of the corresponding previous task but before the execution of the concerned task. As a result, the skipping determining unit 13 can perform the skipping determination operation based on the execution information stored until just before the execution of the concerned task. That makes it possible to perform more appropriate skipping determination.

Furthermore, the skipping determining unit 13 can again perform the skipping determination operation with respect to each task during the execution of that task.

For example, if the task information of a particular task contains a plurality of executor IDs, then that task gets simultaneously delivered to a plurality of users. In that case, even if the task needs to be executed by only one of the users, there is a risk that a plurality of users ends up executing the same task.

In that regard, during the execution of a task, the skipping determining unit 13 can perform the skipping determination operation with respect to the concerned task on a periodic basis, for example; and, when it is determined that the task is skippable, that is, when any one of the users completes the task, can instruct the mediating unit 14 to cancel that task for the remaining users.

For example, if the task information of a particular task contains a skipping condition and a plurality of executor IDs for defining the number of executors or the execution count within a predetermined period of time, then the skipping determining unit 13 repeatedly performs the skipping determination operation with respect to that task after that task has been delivered. Subsequently, if the skipping determining unit 13 determines that the task is skippable, that is, for example, if the skipping condition is satisfied as a result of completion of the task by one of the users; then the mediating unit 14 instructs the delivering unit 15 to send a cancellation instruction for cancelling the concerned task to the user interface devices 3. The cancellation instruction is thus sent to the user interface devices 3 of the users other than the user who completed the concerned task. Upon receiving the cancellation instruction, the executing unit 31 of each concerned user interface device 3 ensures completion of the task that is being currently executed. As a result, it becomes possible to prevent a situation in which a user executes a task that need not be executed.

Alternatively, in the example given above, for example, when one of the users starts a task, the mediating unit 14 can instruct the delivering unit 15 to issue a standby instruction to the user interface devices 3 of the remaining users. Upon receiving the standby instruction, the executing unit 31 of each concerned user interface device 3 displays information prompting waiting on the display unit 32. As a result, while ensuring that the user who was the first to start the concerned task executes the task, it can be ensured that the other users do not execute the same task. Meanwhile, if the feed information in which "started" is stored in the item "state" is obtained via the feedback receiving unit 11, then the mediating unit 14 can determine that one of the users has started the task.

### Effect of first embodiment

The behavior supporting device 1 according to the first embodiment (an example of an information processing device) includes the history registering unit 12, the skipping determining unit 13, and the mediating unit 14. The history registering unit 12 registers the execution information of already-executed tasks of a workflow in the execution history DB 21 of the memory unit (an example of a history storing unit). The skipping determining unit 13 determines, based on the task information indicating the contents of a planned task and based on one or more sets of execution information registered in the execution history DB 21, whether or not the planned task is skippable. The mediating unit 14 skips the task that is determined to be skippable by the skipping determining unit 13. With such a configuration, it becomes possible to reduce the burden on the job executors in a workflow.

Moreover, the history registering unit 12 according to the first embodiment registers execution information further containing the date and time of completion of execution (an example of date of completion of execution) of already-executed tasks in the execution history DB 21 of the memory unit (an example of a history storing unit). Furthermore, the skipping determining unit 13 extracts, as the skipping condition of a planned task, the execution count within a predetermined period of time from the task information; and, based on one or more sets of execution information, when it is determined that the execution count within the predetermined period of time in the past for the same task as the planned task has reached the execution count defined in the skipping condition, determines that the planned task is skippable. With such a configuration, for example, regarding a task that has already been executed by a particular user and that no more needs to be executed by other users, the delivery of that task to the other users can be skipped. As a result, unnecessary tasks are prevented from being delivered to the other users. Moreover, if a skipping condition is included in the task information, then it becomes possible to reduce the number of branches in the workflow, thereby enabling achieving reduction in the burden at the time of flow designing.

### [b] Second Embodiment

### Details of skipping determination operation according to second embodiment

Explained below with reference to FIG. 12 are the details of a skipping determination operation according to a second embodiment. FIG. 12 is a diagram illustrating an example of a skipping determination operation performed according to the second embodiment.

A workflow sometimes includes a task of obtaining a resource and a task of using the obtained resource. Herein, a resource implies, for example, a document file, a drawing file, a presentation file, and some other type of data file. Herein, it is assumed that a resource is an editable data file. However, a resource need not always be editable.

In such a case, instead of asking all executors to execute the task of obtaining a resource, if the resource obtained by one of the executors is shared among all executors, then it becomes possible to eliminate the unnecessary work for all executors to individually obtain the same resource.

In that regard, in the second embodiment, if the same task has been performed in the past and if the resource to be obtained has been already obtained in the past, then the task of obtaining the resource is skipped. Moreover, in the second embodiment, if the task of obtaining a resource is skipped, then the already-obtained resource is added to the delivery information of the tasks in which the resource is to be used, and then the delivery information is delivered.

For example, in FIG. 12 is illustrated an example in which, regarding the user having the user ID "B", the task having the task ID "2" is subjected to the skipping determination operation. Herein, it is assumed that the task having the task ID "2" is a task of obtaining a resource X. Moreover, the task having the task ID "3" is, for example, an editing task in which the obtained resource X is used.

It is assumed that the task having the task ID "2" has been executed in the past by the user having the user ID "A", and that the resource X has already been obtained. In that case, the skipping determining unit 13 determines that the task that has the task ID "2" and that is assigned to the user having the user ID "B" is skippable. As a result, the user having the user ID "B" is spared from unnecessarily re-obtaining the resource that has already been obtained.

Meanwhile, at the time of delivering the task that has the task ID "3" and that involves the use of the resource X, the already-obtained resource X is added to the delivery information of that task and then the delivery information is delivered to the user having the user ID "B". As a result, the user having the user ID "B" can obtain the resource X without having to execute the task of obtaining the resource X.

### Configuration of behavior supporting device according to second embodiment

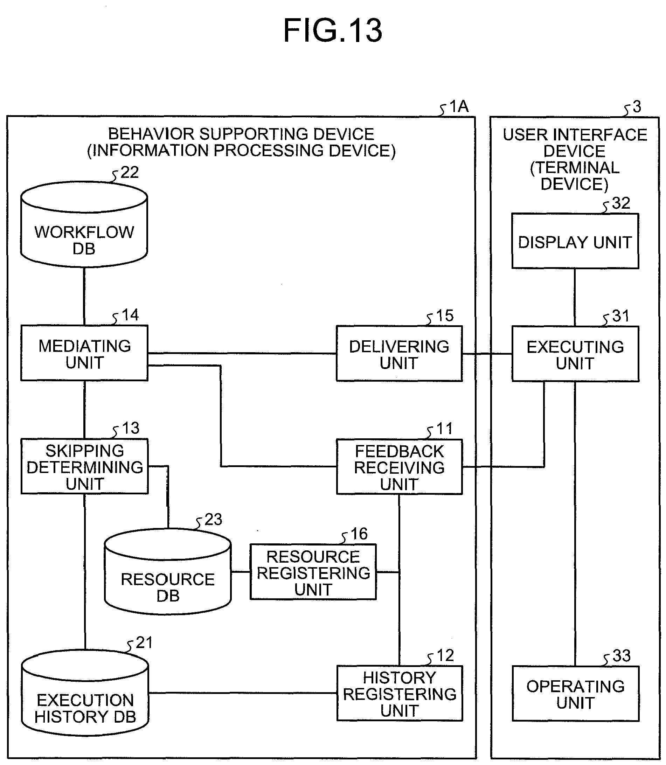

Explained below with reference to FIG. 13 is a configuration of the behavior supporting device according to the second embodiment. FIG. 13 is a functional block diagram illustrating a configuration of the behavior supporting device according to the second embodiment. In the following explanation, the constituent elements identical to the already-explained constituent elements are referred to by the same reference numerals as the already-explained constituent elements, and the explanation thereof is not repeated.

A behavior supporting device 1A according to the second embodiment further includes a resource registering unit 16 and a resource DB 23. Herein, the resource DB 23 is stored in the memory unit (not illustrated).

The resource registering unit 16 obtains the feedback information, which is sent from the user interface device 3, via the feedback receiving unit 11. If the obtained feedback information contains a resource, then the resource registering unit 16 generates resource history information from the feedback information and registers the resource history information in the resource DB 23.

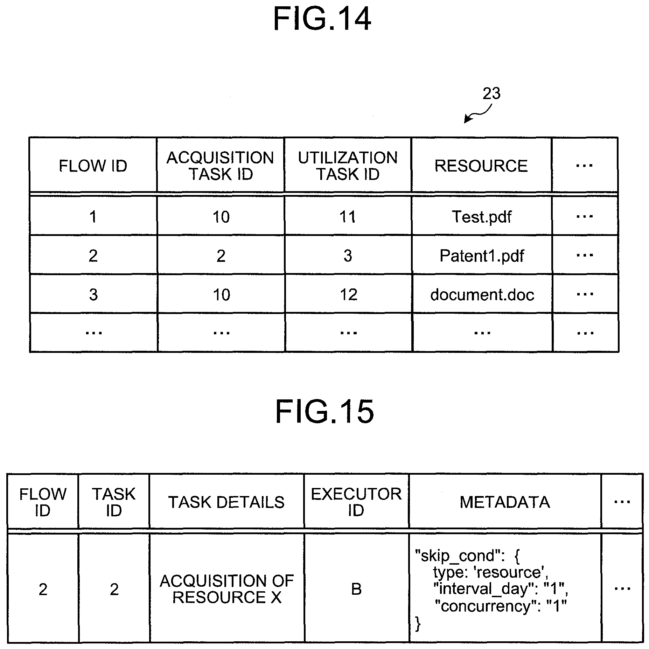

Explained below with reference to FIG. 14 are the contents of the resource history information registered in the resource DB 23. FIG. 14 is a diagram illustrating an exemplary data structure of the resource DB according to the second embodiment.

As illustrated in FIG. 14, in the resource DB 23, a plurality of sets of resource history information is registered. Each set of resource history information registered in the resource DB 23 includes the following items: "flow ID", "acquisition task ID", "utilization task ID", and "resource". In the item "acquisition task ID" is stored the task ID of a task in which a resource was obtained. In the item "utilization task ID" is stored the task ID of a task in which a resource was used. In the item "resource" is stored an obtained resource.

A variety of information included in the resource history information is extracted from the feedback information. More particularly, when a task of obtaining a resource is completed, the executing unit 31 of the user interface device 3 sends, to the behavior supporting device 1A, the feedback information containing the flow ID, the task ID, the state, the executor ID, the date and time, the execution log, and information about the obtained resource. Upon obtaining the feedback information, the resource registering unit 16 extracts the information on the flow ID, the task ID, and the resource from the feedback information; generates the resource history information in which the extracted information is set as the flow ID, the acquisition task ID, and the resource, respectively; and registers the resource history information in the resource DB 23.

When a task of using an obtained resource is completed, the executing unit 31 sends, to the behavior supporting device 1A, the feedback information containing the flow ID, the task ID, the state, the executor ID, the date and time, the execution log, and information about the used resource. Upon obtaining the feedback information, the resource registering unit 16 extracts the information on the flow ID, the task ID, and the resource from the feedback information. Then, the resource registering unit 16 identifies the corresponding resource history information in the resource DB 23 according to the information about the extracted flow ID and the extracted resource; and stores the extracted task ID in the item "utilization task ID" of the identified resource history information.

Meanwhile, the task information of a task for obtaining a resource can also contain information enabling identification of the task that uses the obtained resource (for example, the task ID or information indicating that the resource is to be used in the task planned after n number of tasks). In an identical manner, the task information of a task that uses an obtained resource can also contain information enabling identification of the task that obtained the useful resource (for example, the task ID or information indicating that the resource was obtained by the task executed m number of tasks earlier). In such a case, the resource registering unit 16 can identify, from the task information, the task ID of the task that uses the resource and can store the identified task ID in the item "utilization task ID" of the resource history information.

Meanwhile, there are times when it is determined in advance that an obtained resource is to be used in the next task of the task that obtained the resource. In that case, the resource registering unit 16 can store, in the item "utilization task ID", the task ID of the task that is executed subsequent to the task corresponding to the acquisition task ID.

At the time of newly registering resource history information in the resource DB 23, there are times when the resource history information containing the same flow ID and the same acquisition task ID as the flow ID and the acquisition task ID of the resource history information to be newly registered is already registered in the resource DB 23. In that case, the resource registering unit 16 can overwrite the resource that is included in the already-registered resource history information onto the latest resource that is included in the resource information to be newly registered. As a result, the latest resource and the old resource can be prevented from being redundantly delivered.

Alternatively, the resource registering unit 16 can register the to-be-newly-registered resource history information in the resource DB 23 while also keeping the already-registered resource history information. As a result, the old resource gets redundantly delivered along with the latest resource, thereby enabling the user to use the latest resource while referring to the old resource.

In an identical manner to the first embodiment, in response to a skipping determination request from the mediating unit 14, the skipping determining unit 13 according to the second embodiment determines whether or not a planned task is skippable. Explained below with reference to FIG. 15 are the contents of the task information according to the second embodiment. FIG. 15 is a diagram illustrating an example of the task information according to the second embodiment.

As illustrated in FIG. 15, in the task information according to the second embodiment, the item "flow ID" has "2" set therein; the item "task ID" has "2" set therein; the item "task details" has "acquisition of resource X" set therein; and the item "executor ID" has "B" set therein.

Moreover, in the metadata of the task information illustrated in FIG. 15, the skipping condition representing "to be executed by only one person once a day" and a skipping condition representing "the resource is already obtained" are embedded. Herein, as long as the skipping conditions at least imply that "the same task has been performed in the past and the resource has been already obtained in the past", it serves the purpose.

### Flowchart of skipping determination operation according to second embodiment

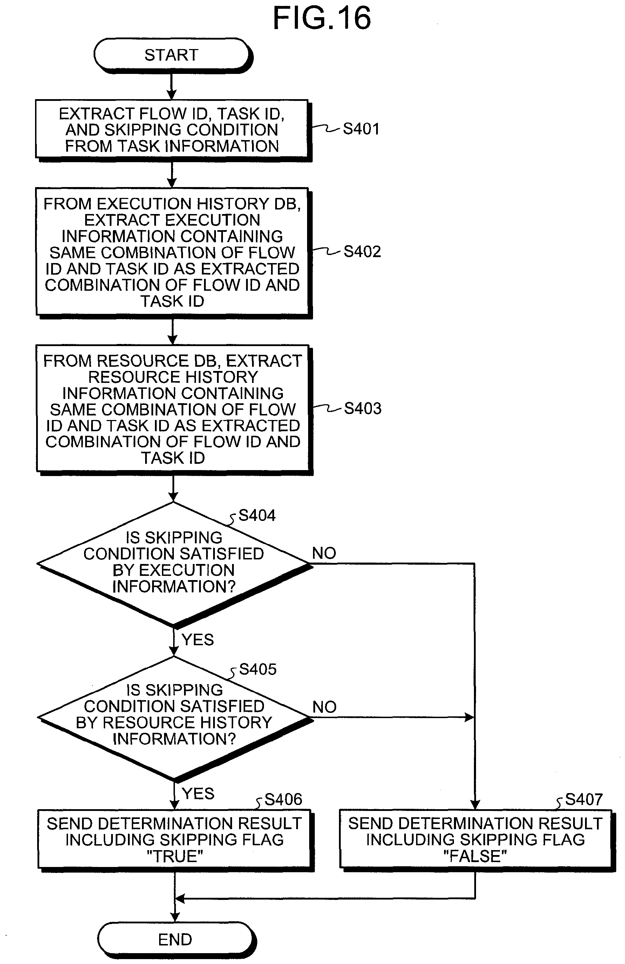

Explained below with reference to FIG. 16 is a specific sequence of operations in a skipping determination operation performed by the skipping determining unit 13 according to the second embodiment. FIG. 16 is a flowchart for explaining a skipping determination operation performed according to the second embodiment.

As illustrated in FIG. 16, when a skipping determination request is received from the mediating unit 14; the skipping determining unit 13 extracts the flow ID, the task ID, and the skipping condition from the task information included in the received skipping determination request (Step S401). Then, the skipping determining unit 13 extracts, from the execution history DB 21, sets of execution information containing the same combination of the flow ID and the task ID as the extracted combination of the flow ID and the task ID (Step S402). For example, if it is assumed that the received skipping determination request includes the task information illustrated in FIG. 15; then the skipping determining unit 13 extracts, from the execution history DB 21 illustrated in FIG. 6, the execution information containing the flow ID "2", the task ID "2", the executor ID "A", and the date and time of completion of execution "23/12/2015 7:30".

Moreover, the skipping determining unit 13 extracts, from the resource DB 23, the resource history information containing the same combination of the flow ID and the acquisition task ID as the combination of the flow ID and the task ID extracted at Step S401 (Step S403). For example, the skipping determining unit 13 extracts the resource history information containing the flow ID "2", the acquisition task ID "2", the utilization task ID "3", and the resource "Patent1.pdf". Meanwhile, the operations at Steps S402 and S403 can be performed in the reverse order too.

Subsequently, the skipping determining unit 13 determines whether or not the skipping condition extracted at Step S401 is satisfied by one or more sets of execution information extracted at Step S402 (Step S404). If it is determined that the skipping condition is satisfied (Yes at Step S404), then the system control proceeds to Step S405. However, at Step S404, if the skipping condition is not satisfied (No at Step S404); then the system control proceeds to Step S407.

For example, assume that the execution information containing the acquisition task ID "2", the utilization task ID "3", and the date and time of completion of execution "12/23/2015 7:30" is extracted at Step S402. In that case, since the execution information satisfies the skipping condition representing "to be executed by only one person once a day"; the system control proceeds to Step S405.

At Step S405, the skipping determining unit 13 determines whether or not the skipping condition extracted at Step S401 is satisfied by one or more sets of resource history information extracted at Step S403. If it is determined that the skipping condition is satisfied (Yes at Step S405), then the skipping determining unit 13 sends a determination result including the skipping flag "true" to the mediating unit 14 (Step S406), and ends the skipping determination operation.

For example, assume that the resource history information containing the flow ID "2", the acquisition task ID "2", the utilization task ID "3", and the resource "Patent1.pdf" is extracted at Step S403. In that case, since the execution information satisfies the skipping condition representing "the resource is already obtained", the skipping determining unit 13 sends a determination result including the skipping flag "true" to the mediating unit 14.

On the other hand, if the skipping condition is not satisfied at Step S404 (No at Step S404) or if the skipping condition is not satisfied at Step S405 (No at Step S405); then the skipping determining unit 13 sends a determination result including the skipping flag "false" to the mediating unit 14 (Step S407), and ends the skipping determination operation.

Meanwhile, the operations at Steps S404 and S405 can be performed in the reverse order too. Alternatively, the operations at Steps S404 and S405 can be performed in a simultaneous manner. That is, the skipping determining unit 13 determines whether or not the skipping condition extracted at Step S401 is satisfied by one or more sets of execution information extracted at Step S402 and by one or more sets of resource history information extracted at Step S403.

Meanwhile, the resource history information can further contain information related to the usage limit of the resources. The usage limit can be included in the feedback information, and can be extracted from the feedback information and stored in the resource DB 23 using the resource registering unit 16. Moreover, the resource registering unit 16 can store, in the resource DB 23, the last day of the year or the last day of the fiscal year in which the feedback information is obtained (for example, 12/31/2015 or 3/31/2016).

In that case, the skipping determining unit 13 can exclude, from the material for determination during the skipping determination operation, such resource history information which has exceeded the usage limit. That is, even if resource history information satisfying the skipping condition is stored in the resource DB 23; if that resource history information has exceeded the usage limit, then the skipping determining unit 13 can determine the resource history information to be skippable.

More particularly, the skipping determining unit 13 can further extract, from among one or more sets of resource history information extracted at Step S403 illustrated in FIG. 16, resource history information that has not exceeded the usage limit; and can determine whether or not the skipping condition is satisfied by only the resource history information that has not exceeded the usage limit.

### Effect of second embodiment

The behavior supporting device 1A according to the second embodiment further includes the resource registering unit 16 that registers resource history information, which contains the acquisition task ID (an example of acquisition task identification information) enabling identification of the task in which a resource was obtained, in the resource DB 23 of the memory unit (an example of a resource storing unit). Moreover, from the task information, the skipping determining unit 13 according to the second embodiment extracts, as the skipping condition for a planned task, the fact that the same task has been executed in the past and the resource has been already obtained; and, when the execution information containing the same task ID as the task ID of the planned task (an example of task identification information) is registered in the execution history DB 21 of the memory unit (an example of a history storing unit) and when the resource history information containing the same acquisition task ID as the task ID of the planned task is registered in the resource DB 23 (an example of a resource storing unit), determines that the planned task is skippable. With such a configuration, it becomes possible to skip the unproductive task of re-obtaining the resource that has already been obtained, thereby making it possible to reduce the burden on the job executors in a workflow.

Moreover, the resource registering unit 16 according to the second embodiment registers resource history information, which further includes the usage limit of a resource obtained in an already-executed task, in the resource DB 23 of the memory unit (an example of a resource storing unit). Furthermore, the skipping determining unit 13 according to the second embodiment determines a planned task to be skippable when the task ID same as the task ID of the planned task is registered in the execution history DB 21 of the memory unit (an example of a history storing unit), when the resource history information containing the same acquisition task ID as the task ID of the planned task is registered in the resource DB 23 of the memory unit (an example of a resource storing unit), and when the usage limit specified in the resource history information containing the same acquisition task ID has not been exceeded. With such a configuration, it becomes possible to prevent a situation in which a task is determined to be skippable because of the presence of an old resource that is unusable, and in which the latest resource that is usable is consequently not obtained.

Furthermore, in the case of newly storing resource history information in the memory unit (an example of a resource storing unit), if the resource history information containing the same task ID as the task ID included in the to-be-newly-stored resource history information is already stored in the memory unit, the resource registering unit 16 according to the second embodiment can overwrite the resource that is included in the resource history information containing the same task ID onto the resource included in the resource history information to be newly stored. With such a configuration, the latest resource and the old resource can be prevented from being redundantly delivered.

Moreover, in the case of newly registering resource history information in the memory unit (an example of a resource storing unit), if the resource history information containing the same task identification information as the task ID included in the to-be-newly-stored resource history information is already stored in the memory unit, then the resource registering unit 16 according to the second embodiment stores the to-be-newly-stored resource history information in the memory unit while also keeping the resource history information containing the same task ID. With such a configuration, for example, the user can use the latest resource while referring to the old resource.

### [c] Third Embodiment

### Details of skipping determination operation according to third embodiment

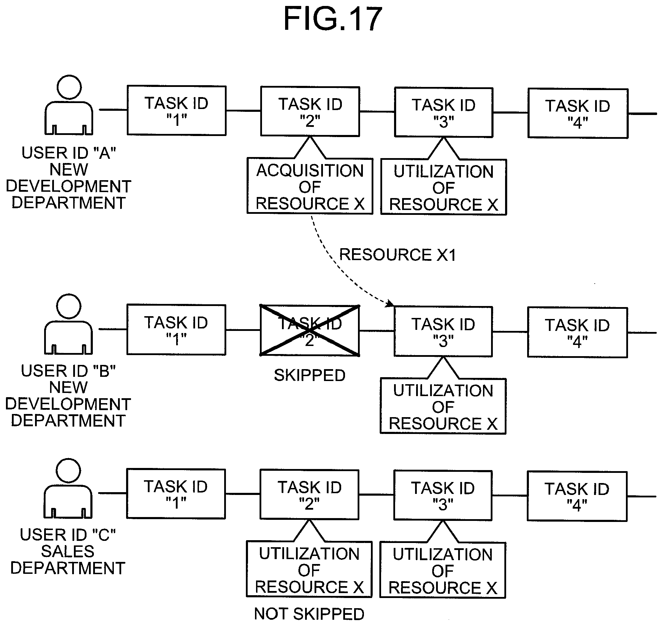

Explained below with reference to FIG. 17 are the details of a skipping determination operation according to a third embodiment. FIG. 17 is a diagram illustrating an example of a skipping determination operation performed according to the third embodiment.

While executing the same workflow, it is possible to think that different persons use different resources. For example, in the case of a workflow for a purchasing activity, even if the same task is to be executed, it is possible to think that the file for entering data is different for each department.

In that regard, in the third embodiment, in the case of determining whether or not a particular task is skippable, a skipping determination operation is performed by referring only to such execution information, from among the sets of execution information stored in the execution history DB 21, which corresponds to the user having the same attribute as the attribute of the prospective executor of the concerned task.

For example, in FIG. 17 is illustrated an example of performing a skipping determination operation with respect to a task that is assigned to the users having the user IDs "B" and "C". Herein, the task having the task ID "2" has been executed in the past by the user having the user ID "A" and belonging to a "new development department"; and the resource X has already been obtained. In this case, regarding the user having the user ID "B" and belonging to the same "new development department", the task having the task ID "2" is determined to be skippable. However, regarding the user having the user ID "C" and belonging to the "sales department" that is a different department, the same task is determined to be non-skippable. As a result, it becomes possible to prevent a situation in which a task is determined to be skippable because of the presence of a resource that is of another department thereby making it actually unusable, and in which the resource that is supposed to be used is consequently not obtained.

Meanwhile, herein, although the department is given as an example of the attribute, it is also possible to use the appointed post, the skill, or the gender as the attribute.

### Configuration of behavior supporting device according to third embodiment

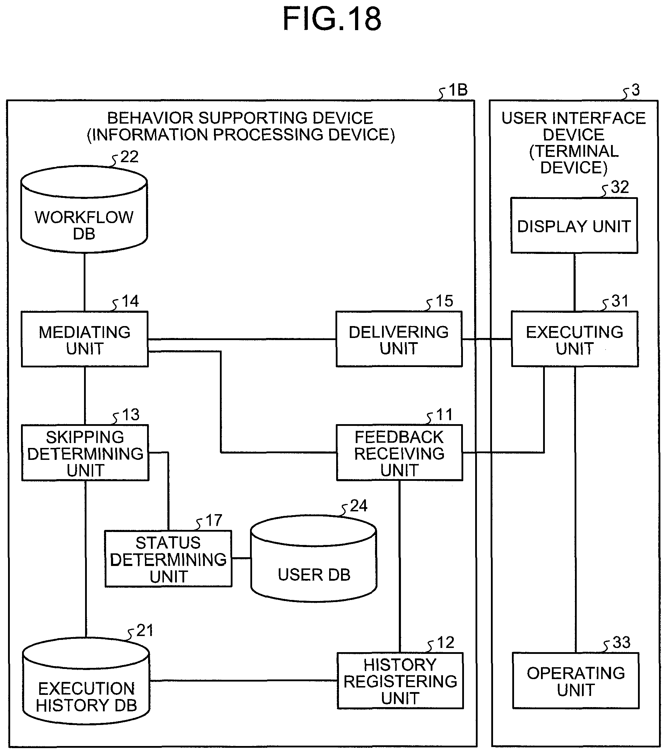

Explained below with reference to FIG. 18 is a configuration of the behavior supporting device according to the third embodiment. FIG. 18 is a functional block diagram illustrating a configuration of the behavior supporting device according to the third embodiment. In the following explanation, the constituent elements identical to the already-explained constituent elements are referred to by the same reference numerals as the already-explained constituent elements, and the explanation thereof is not repeated.

A behavior supporting device 1 B according to the third embodiment further includes a status determining unit 17 and a user DB 24. Herein, the user DB 24 is stored in the memory unit (not illustrated).

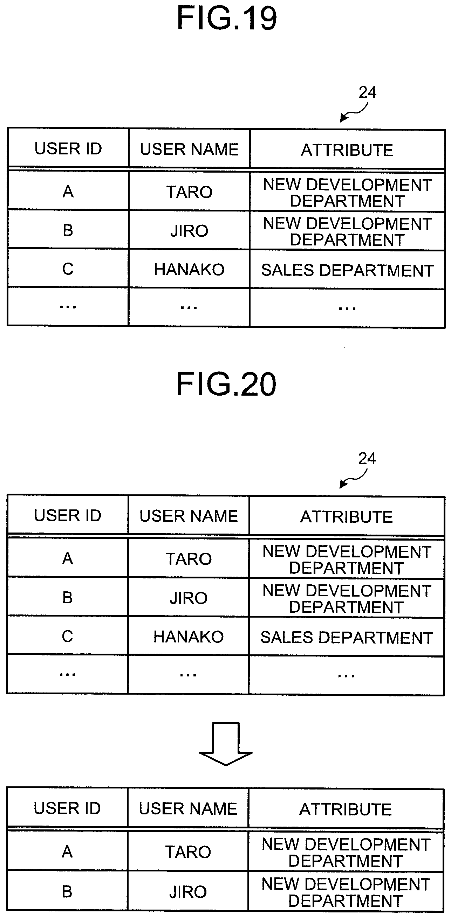

Explained below with reference to FIG. 19 is an exemplary data structure of the user DB 24. FIG. 19 is a diagram illustrating an exemplary data structure of the user DB 24 according to the third embodiment.

As illustrated in FIG. 19, in the user DB 24, user information of a plurality of users is registered. The user information contains, for example, the following items: "user ID", "user name", and "attribute". In the item "user ID" is stored a user ID. In the item "user name" is stored a user name. In the item "attribute" is stored information about the department of a user. Moreover, in the user DB 24, it is also possible to include the terminal IDs of the user interface devices 3 that are used by the users.

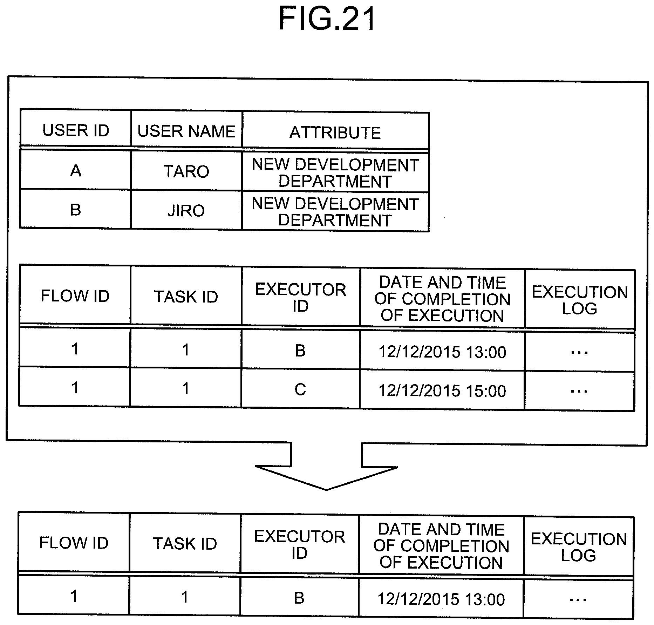

The status determining unit 17 extracts, in response to an extraction request issued by the skipping determining unit 13, execution information to be used in the skipping determination operation. Explained below with reference to FIGS. 20 and 21 are the details of the extraction operation performed by the status determining unit 17. FIGS. 20 and 21 are diagrams illustrating an example of the extraction operation performed according to the third embodiment.

An extraction request issued by the skipping determining unit 13 includes the user ID of the prospective executor and includes the execution information extracted from the execution history DB 21 by the skipping determining unit 13, that is, the execution information of the same task as the planned task.

The status determining unit 17 retrieves the user ID of the prospective executor from the extraction request, and extracts user information containing the same attribute as the attribute corresponding to the retrieved user ID. For example, assume that the extraction request includes the user ID "A". In that case, the status determining unit 17 extracts, from the user DB 24, user information containing the same attribute as the attribute "new development department" corresponding to the user ID "A". For example, in the example illustrated in FIG. 20, the status determining unit 17 extracts the user information containing the user ID "A" and the user information containing the user ID "B".

Then, the status determining unit 17 extracts, from the execution information included in the extraction request (as illustrated in the middle part in FIG. 21), the execution information containing the same user ID as the user ID included in the extracted user information (as illustrated in the upper part in FIG. 21). As a result, as illustrated in the lower part in FIG. 21, the execution information containing the executor ID "B" gets extracted. Then, the status determining unit 17 sends the extracted execution information to the skipping determining unit 13.

Returning to the explanation with reference to FIG. 18, the skipping determining unit 13 receives a skipping determination request from the mediating unit 14; and extracts the flow ID, the task ID, the skipping condition, and the user ID (the executor ID) of the prospective executor from the task information included in the received skipping determination request. Then, the skipping determining unit 13 searches the execution history DB 21 with the flow ID and task ID, which are extracted from the task information, serving as the keys; and extracts the execution information containing the same flow ID and the same task ID from the execution history DB 21.

Subsequently, the skipping determining unit 13 generates an extraction request that includes the execution information extracted from the execution history DB 21 and includes the executor ID extracted from the task information included in the skipping determination request; and sends the extraction request to the status determining unit 17. Then, the skipping determining unit 13 obtains the execution information extracted by the status determining unit 17 as a result of performing the extraction operation.

Subsequently, the skipping determining unit 13 determines whether or not the skipping condition is satisfied by the execution information obtained from the status determining unit 17.

### Flowchart of skipping determination operation according to third embodiment

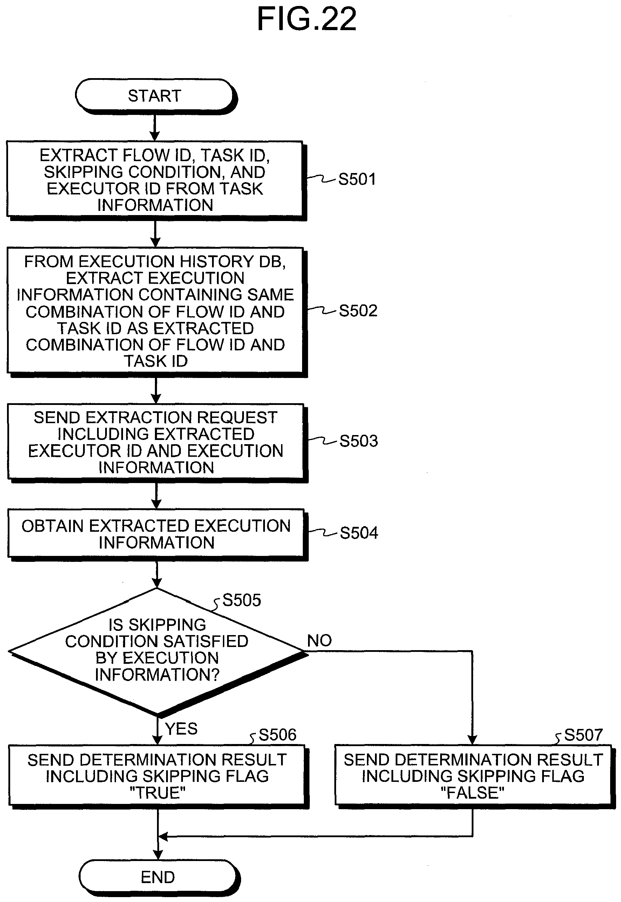

Explained below with reference to FIG. 22 is a specific sequence of operations in a skipping determination operation performed according to the third embodiment. FIG. 22 is a flowchart for explaining a skipping determination operation performed according to the third embodiment.

As illustrated in FIG. 22, the skipping determining unit 13 receives a skipping determination request from the mediating unit 14; and extracts the flow ID, the task ID, the skipping condition, and the executor ID from the task information included in the received skipping determination request (Step S501). Then, the skipping determining unit 13 extracts, from the execution history DB 21, the execution information containing the same combination of the flow ID and the task ID as the extracted combination of the flow ID and the task ID (Step S502).

Subsequently, the skipping determining unit 13 sends an extraction request, which includes the executor ID extracted at Step S501 and the executor information extracted at Step S502, to the status determining unit 17 (Step S503). Then, the skipping determining unit 13 obtains the extracted execution information from the status determining unit 17 (Step S504).

Subsequently, the skipping determining unit 13 determines whether or not the skipping condition extracted at Step S501 is satisfied by one or more sets of execution information extracted at Step S504 (Step S505). If it is determined that the skipping condition is satisfied (Yes at Step S505), then the skipping determining unit 13 sends a determination result including the skipping flag "true" to the mediating unit 14 (Step S506), and ends the skipping determination operation.

On the other hand, at Step S505, if the skipping condition is not satisfied (No at Step S505), then the skipping determining unit 13 sends a determination result including the skipping flag "false" to the mediating unit 14 (Step S507), and ends the skipping determination operation.

### Effect of third embodiment

The behavior supporting device 1 B according to the third embodiment further includes the memory unit (an example of a user storing unit) and the status determining unit 17 (an example of an extracting unit). In the user DB 24 of the memory unit (an example of a user memory unit) is registered a plurality of sets of user information, each of which contains the user ID (an example of user identification information) enabling identification of a user and the department (an example of an attribute) of the user. Based on the sets of user information registered in the user DB 24 of the memory unit (an example of a user storing unit), the status determining unit 17 extracts the user ID of the user having the same attribute as the attribute of the prospective executor of the planned task. Moreover, the history registering unit 12 according to the third embodiment registers, in the execution history DB 21 of the memory unit (an example of a history storing unit), execution information that further contains the user ID of the executor of an already-executed task. Furthermore, the skipping determining unit 13 according to the third embodiment extracts the skipping condition and the user ID of the prospective executor of the planned task from the task information, and determines whether or not the planned task is skippable based on the execution information containing the user ID extracted by the status determining unit 17, from among one or more sets of execution information registered in the execution history DB 21 of the memory unit (an example of a history storing unit), and based on the skipping condition. With such a configuration, for example, it becomes possible to prevent a situation in which a task is determined to be skippable because of the presence of a resource that is of another department thereby making it actually unusable, and in which the resource that is supposed to be used is consequently not obtained.

Meanwhile, the configuration of the behavior supporting device 1 B according to the third embodiment is not limited to the configuration illustrated in FIG. 18. Alternatively, for example, the behavior supporting device 1 B can include the resource registering unit 16 and the resource DB 23 that are included in the behavior supporting device 1A according to the second embodiment. In that case, for example, after performing the operations at Steps S501 to S504 illustrated in FIG. 22, the skipping determining unit 13 can perform the operations from Step S403 onward as illustrated in FIG. 16.

### [d] Fourth Embodiment

Regarding a task that has been determined to be skippable by the skipping determining unit 13, there may be times when a user wishes to execute that task without skipping. In that regard, in a fourth embodiment, in response to the declaration of intent by the user, the skipped task is delivered so as to enable the user to execute the task.

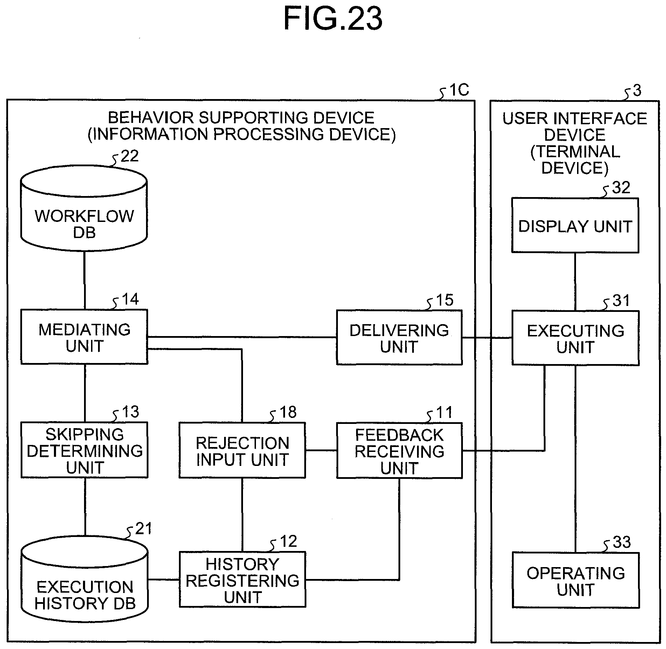

FIG. 23 is a functional block diagram illustrating a configuration of the behavior supporting device according to the fourth embodiment. As illustrated in FIG. 23, a behavior supporting device 1C further includes a rejection input unit 18 that receives feedback information from the display unit 32 of the user interface device 3 via the feedback receiving unit 11.

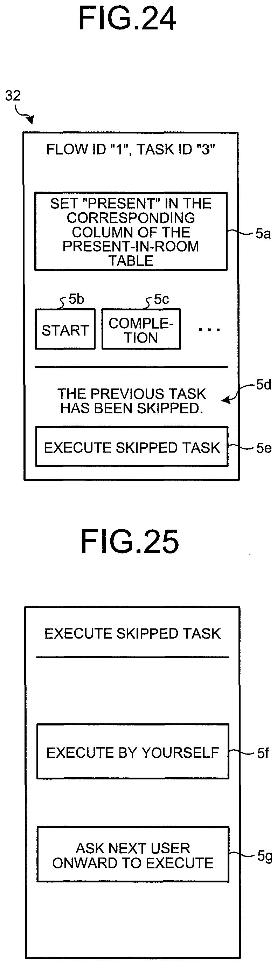

Explained below with reference to FIGS. 24 and 25 are the contents of the feedback information according to the fourth embodiment. FIGS. 24 and 25 are diagrams illustrating display examples of the display unit 32 according to the fourth embodiment.

As illustrated in FIG. 24, in the display unit 32, in addition to displaying the text information 5a and 5d, the start button 5b, and the completion button 5c; a rejection button 5e is displayed to enable rejecting the skipping of the previous task. When the user selects the rejection button 5e, the executing unit 31 of the user interface device 3 switches the screen from a screen illustrated in FIG. 24 to a screen illustrated in FIG. 25.

The screen illustrated in FIG. 25 is meant for selecting the execution timing of the skipped task; and includes an immediate-execution button 5f enabling the user to execute the task by himself or herself, and a postponed-execution button 5g enabling the next user onward to execute the task. If the user selects the immediate-execution button 5f; the executing unit 31 sends, to the feedback receiving unit 11, feedback information containing rejection information that contains an immediate-execution flag set to "true". On the other hand, if the user selects the postponed-execution button 5g; then the executing unit 31 sends, to the feedback receiving unit 11, feedback information containing rejection information that contains the immediate-execution flag set to "false".

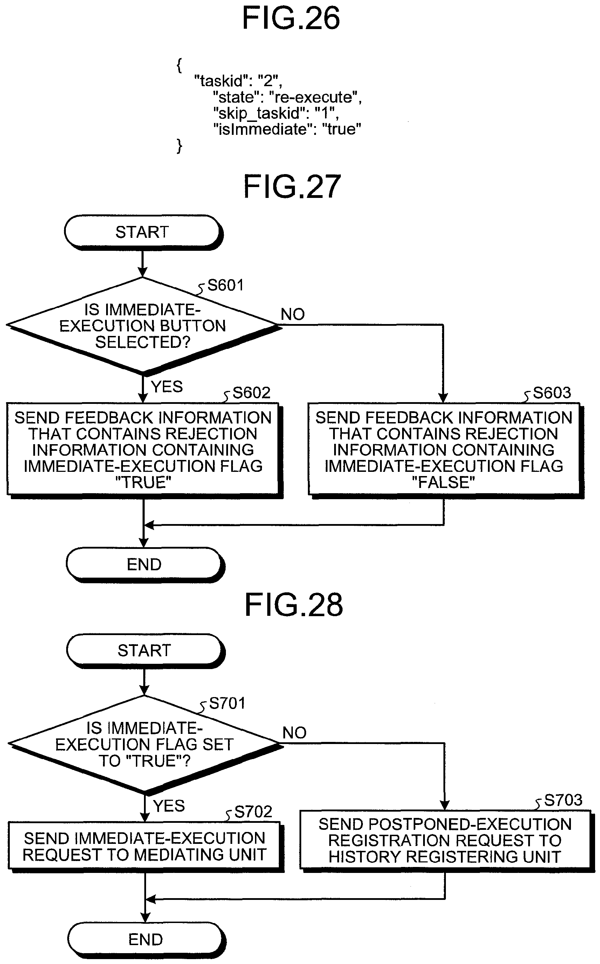

FIG. 26 is a diagram illustrating an example of the rejection information according to the fourth embodiment. As illustrated in FIG. 26, the rejection information contains, for example, the task ID of the current task, information indicating re-execution of the skipped task (i.e., the previous task), the task ID of the task to be re-executed (i.e., the previous task), and the immediate-execution flag. For example, the rejection information illustrated in FIG. 26 contains the task ID "2" of the current task, information "re-execute" indicating re-execution of the skipped task, the task ID "1" of the task to be re-executed, and the immediate-execution flag "true".

Regarding the task to be re-executed (i.e., the previous task) as included in the rejection information; if the task ID is assigned according to, for example, a specific rule (such as the sequence of execution of the task), then that task ID can be figured out from the task ID of the current task.

Returning to the explanation with reference to FIG. 23, when rejection information containing the immediate-execution flag "true" is included in the received feedback information; the rejection input unit 18 at least extracts, from the feedback information, the executor ID along with the task ID of the task to be re-executed, and generates an immediate-execution request. Then, the rejection input unit 18 sends the generated immediate-execution request to the mediating unit 14.

When rejection information containing the immediate-execution flag "false" is included in the received feedback information; the rejection input unit 18 at least extracts, from the feedback information, the task ID of the task to be re-executed and generates a postponed-execution registration request. Then, the rejection input unit 18 sends the postponed-execution registration request to the history registering unit 12.

The mediating unit 14 receives an immediate-execution request from the rejection input unit 18; identifies the task to be re-executed by referring to the task ID included in the received immediate-execution request; and decides on re-execution of the identified task with the user having the executor ID included in the re-execution request serving as the delivery destination. As a result, the skipped task gets delivered to that user.

The history registering unit 12 receives a postponed-execution registration request from the rejection input unit 18; registers, in the execution history DB 21, the execution information that contains the task ID included in the received postponed-execution registration request and that contains the postponed-execution flag. During the skipping determination operation regarding a particular task, if execution information containing the task ID of that particular task and the postponed-execution flag is already registered in the execution history DB 21; then the skipping determining unit 13 determines that the task is not skippable regardless of whether or not the skipping condition is satisfied.

Flowchart of rejection information transmission operation according to fourth embodiment

Explained below with reference to FIG. 27 is a flowchart for explaining a rejection information transmission operation according to the fourth embodiment. FIG. 27 is a flowchart for explaining a rejection information transmission operation performed according to the fourth embodiment. The flowchart illustrated in FIG. 27 is initiated in response to the selection of the rejection button 5e illustrated in FIG. 24.

As illustrated in FIG. 27, the executing unit 31 of the user interface device 3 determines whether or not the immediate-execution button 5f (see FIG. 25) is selected (Step S601). If it is determined that the immediate-execution button 5f is selected (Yes at Step S601); then the executing unit 31 sends feedback information that contains rejection information containing the immediate-execution flag "true" (Step S602), and ends the operations. On the other hand, at Step S601, if the immediate-execution button 5f is not selected, that is, if the postponed-execution button 5g is selected (No at Step S601); then the executing unit 31 sends feedback information that contains rejection information containing the immediate-execution flag "false" (Step S603), and ends the operations.

### Flowchart of rejection input operation according to fourth embodiment

Explained below with reference to FIG. 28 is a flowchart for explaining a rejection input operation performed according to the fourth embodiment. FIG. 28 is a flowchart for explaining a rejection input operation performed according to the fourth embodiment. The flowchart illustrated in FIG. 28 is initiated when the rejection input unit 18 receives feedback information from the feedback receiving unit 11.

As illustrated in FIG. 28, the rejection input unit 18 determines whether or not "true" is set in the immediate-execution flag of the rejection information included in the received feedback information (Step S701). If it is determined that the immediate-execution flag is set to "true" (Yes at Step S701); then the rejection input unit 18 generates an immediate-execution request and sends it to the mediating unit 14 (Step S702), and ends the operations. On the other hand, at Step S701, if the immediate-execution flag is not set to "true", that is, if the immediate-execution flag is set to "false" (No at Step S701); then the rejection input unit 18 generates a postponed-execution registration request and sends it to the history registering unit 12 (Step S703), and ends the operations.

### Effect of fourth embodiment

In the fourth embodiment, the behavior supporting device 1C further includes the rejection input unit 18 (an example of an obtaining unit). The rejection input unit 18 obtains rejection information that represents the declaration of intent of the user to execute the task that has been determined to be skippable by the skipping determining unit 13. When the rejection input unit 18 obtains the rejection information, the mediating unit 14 decides on the execution of the task that has been determined to be skippable by the skipping determining unit 13. With such a configuration, the skipping of a task can be called off according to the intention of the user, thereby enabling execution of the concerned task.

Moreover, regarding the task that has been determined to be skippable, the mediating unit 14 decides on asking the next prospective executor to execute the concerned task. With such a configuration, regarding the task whose skipping has been called off, the next prospective executor of that task can be asked to execute the task.

Furthermore, the mediating unit 14 decides on asking the user who sent the rejection information (i.e., the user who declared the intent) to execute the task. With such a configuration, regarding the task whose skipping has been called off, the user who called off the skipping can be asked to execute the task.

### Miscellaneous

In the embodiments described above, in order to enable setting a different skipping condition for each task, task-by-task skipping conditions are included in the task information. However, if the same skipping condition is to be applied to all tasks, then the skipping condition need not be included in the task information. For example, in the case of determining whether or not a task is skippable; if the execution information of the same task to the concerned task is stored in the execution history DB 21, then the skipping determining unit 13 can determine that the concerned task is skippable.

Moreover, in the embodiments described above, although the skipping condition is embedded in the metadata, it is alternatively possible to set an item "skipping condition" separately from the item "metadata" and to store the skipping condition in the item "skipping condition". However, as a result of embedding the skipping condition in the metadata as described in the embodiments, the degree of complexity of the data can be held down as compared to the case in which the item "skipping condition" is separately set.

Furthermore, in the embodiments described above, a task is identified using a combination of the flow ID and the task ID. Alternatively, a task can be identified using only the task ID.

Meanwhile, in the embodiments described above, the constituent elements of the device illustrated in the drawings are merely conceptual, and need not be physically configured as illustrated. The constituent elements, as a whole or in part, can be separated or integrated either functionally or physically based on various types of loads or use conditions. For example, the skipping determining unit 13 and the mediating unit 14 can be integrated into a single constituent element. Moreover, the memory unit including the execution history DB 21, the workflow DB 22, the resource DB 23, and the user DB 24 can be connected via a network as an external device of the behavior supporting devices 1, 1A, 1B, and 1C.

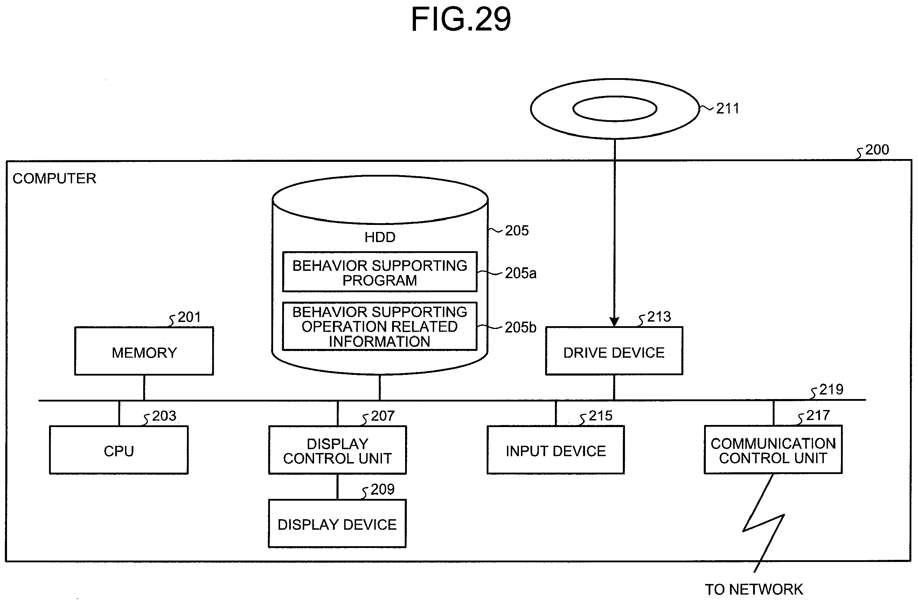

Moreover, the various operations explained in the embodiments described above can be implemented by executing computer programs, which are written in advance, in a computer such as a personal computer or a workstation. In that regard, given below is the explanation of an exemplary computer that executes a behavior supporting program meant for implementing identical functions to the functions of the behavior supporting device 1 illustrated in FIG. 1. FIG. 29 is a diagram illustrating an exemplary computer that executes the behavior supporting program.

As illustrated in FIG. 29, a computer 200 includes a central processing unit (CPU) 203 that performs a variety of arithmetic processing; an input device 215 that receives input of data from the user; and a display control unit 207 that controls a display device 209. Moreover, the computer 200 includes a drive device 213 that reads computer programs from a memory medium; and a communication control unit 217 that performs data communication with other computers via a network. Furthermore, the computer 200 includes a memory 201 that is used to temporarily store a variety of information; and a hard disk drive (HDD) 205. Herein, the memory 201, the CPU 203, the HDD 205, the display control unit 207, the drive device 213, the input device 215, and the communication control unit 217 are connected to each other by a bus 219.

The drive device 213 is, for example, a device meant for a removable disk 211. The HDD 205 is used to store a behavior supporting program 205a and behavior supporting operation related information 205b.

The CPU 203 reads the behavior supporting program 205a, loads it in the memory 201, and executes it as a process. This process corresponds to the functional units of the behavior supporting device 1. The behavior supporting operation related information 205b corresponds to the execution history DB 21 and the workflow DB 22. For example, the removable disk 211 is used to store a variety of information such as the behavior supporting program 205a.

Meanwhile, the behavior supporting program 205a need not be stored in the HDD 205 from the beginning. Alternatively, for example, the behavior supporting program 205a can be stored in a portable physical medium such as a flexible disk (FD), a compact disk read only memory (CD-ROM), a digital video disk (DVD), a magneto optical disk, or an IC card that can be inserted in the computer 200. Then, the computer 200 can read the behavior supporting program 205a from the physical medium and execute it.

According to an embodiment of one aspect of the invention, it becomes possible to reduce the burden on the job executors in a workflow.

## Claims

1. An information processing device comprising:
a history registering unit (12) configured to store, in a history storing unit (21), execution information of an already-executed task which has been executed in past in a workflow;
a skipping determining unit (13) configured to, based on task information indicating details of a planned task and based on one or more sets of execution information stored in the history storing unit (21), determine whether or not the planned task is skippable; and
a mediating unit (14) configured to skip a task that has been determined to be skippable by the skipping determining unit (13).

2. The information processing device according to claim 1, wherein the skipping determining unit (13) is configured to extract a skipping condition for a planned task from the task information, and based on the extracted skipping condition and based on the one or more sets of execution information, determine whether or not the planned task is skippable.

3. The information processing device according to claim 2, wherein
the history registering unit (12) is configured to store, in the history storing unit (21), execution information that further contains date of completion of execution of the already-executed task, and
the skipping determining unit (13) is configured to
extract, from the task information and as a skipping condition for the planned task, execution count within a predetermined period of time, and
based on the one or more sets of execution information, when it is determined that execution count within the predetermined period of time in past for a task identical to the planned task has reached execution count defined in the skipping condition, determine that the planned task is skippable.

4. The information processing device according to claim 2, further including a resource registering unit (16) configured to store, in a resource storing unit (23), resource history information which contains a resource obtained in the already-executed task and contains obtained-task identification information enabling identification of the task from which the resource is obtained, wherein
the skipping determining unit (13) is configured to
extract, from the task information and as a skipping condition for the planned task, fact that an identical task has been executed in past and that a resource is already obtained, and
when execution information containing identical task identification information to task identification information of the planned task is stored in the history storing unit (21) and when resource history information containing identical obtained-task identification information to task identification information of the planned task is stored in the resource storing unit (23), determine that the planned task is skippable.

5. The information processing device according to claim 4, wherein
the resource registering unit (16) is configured to store, in the resource storing unit (23), resource history information further containing usage limit for the resource obtained in the already-executed task, and
when execution information containing identical task identification information to task identification information of the planned task is stored in the history storing unit (21), when resource history information containing identical obtained-task identification information to task identification information of the planned task is stored in the resource storing unit (23), and when usage limit included in the resource history information containing the identical obtained-task identification information is not yet exceeded, the skipping determining unit (13) is configured to determine that the planned task is skippable.

6. The information processing device according to claim 4 or 5, wherein, in case of newly storing the resource history information in the resource storing unit (23), when resource history information containing identical task identification information to task identification information included in resource history information to be newly stored is already stored in the resource storing unit (23), the resource registering unit (16) is configured to overwrite resource that is included in the resource history information containing the identical task identification information onto resource included in the resource history information to be newly stored.

7. The information processing device according to claim 4 or 5, wherein, in case of newly storing the resource history information in the resource storing unit (23), when resource history information containing identical task identification information to task identification information included in resource history information to be newly stored is already stored in the resource storing unit (23), the resource registering unit (16) is configured to store, in the resource storing unit (23), the resource history information to be newly stored, while also keeping the resource history information containing the identical task identification information.

8. The information processing device according to any of claims 2 to 7, further including:
a user storing unit (24) configured to store a plurality of sets of user information each of which contains user identification information enabling identification of a user and which contains attribute of the user; and
an extracting unit (17) configured to, based on the plurality of sets of user information stored in the user storing unit (24), extract user identification information of a user having identical attribute to attribute of a prospective executor of the planned task, wherein
the history registering unit (12) is configured to store, in the history storing unit (21), execution information that further contains user identification information of a user who is executor of the already-executed task, and
the skipping determining unit (13) is configured to
extract, from the task information, skipping condition for a planned task and user identification information of a prospective executor, and
determine whether or not the planned task is skippable based on execution information containing the user identification information extracted by the extracting unit (17) from among one or more sets of execution information stored in the history storing unit (21), and the skipping condition.

9. The information processing device according to any of claims 1 to 8, further including an obtaining unit (18) configured to obtain declaration of intent of a user to execute a task that has been determined to be skippable by the skipping determining unit (13), wherein
when the declaration of intent is obtained by the obtaining unit (18), the mediating unit (14) is configured to decide on execution of the task that has been determined to be skippable.

10. The information processing device according to claim 9, wherein the mediating unit (14) is configured to decide on asking next prospective executor of the task that has been determined to be skippable to execute concerned task.

11. The information processing device according to claim 9, wherein the mediating unit (14) is configured to decide on asking the user who gave the declaration of intent to execute concerned task.

12. A behavior supporting method that, when executed by a computer, causes the computer to perform:
storing, in a history storing unit (21), execution information of an already-executed task which has been executed in past in a workflow;
determining, based on task information indicating details of a planned task and based on one or more sets of execution information stored in the history storing unit (21), whether or not the planned task is skippable; and
skipping a task that has been determined to be skippable.

13. A behavior supporting program that causes a computer to execute a process comprising:
storing, in a history storing unit (21), execution information of an already-executed task which has been executed in past in a workflow;
determining, based on task information indicating details of a planned task and based on one or more sets of execution information stored in the history storing unit (21), whether or not the planned task is skippable; and
skipping a task that has been determined to be skippable.
